# EUROPEAN PATENT APPLICATION

(11) **EP 2 835 780 A1**
(43) Date of publication of application: **11.02.2015**
(21) Application number: 13306128.3
(22) Date of filing: 06.08.2013
(51) Int. Cl.: G06Q 50/00, H04N 21/4627, H04N 21/475, H04N 21/4788

(54) **Method for the rendering of a first multimedia content, corresponding system, communication terminal, server, computer program and non-transitory computer-readable medium**

(71) Applicant: Thomson Licensing, 92130 Issy-les-Moulineaux (FR)
(72) Inventor: Le Garjan, Bruno, 35576 CESSON SEVIGNE CEDEX (FR); Morillon, GILLES, 35576 CESSON SEVIGNE CEDEX (FR); Beasse, Roland, 35576 CESSON SEVIGNE CEDEX (FR); Corda, Gerard, 35576 CESSON SEVIGNE CEDEX (FR)
(74) Representative: Perrot, Sébastien

(57) **Abstract**

The invention relates to a method allowing a user to access a multimedia content, on its communication terminal, that is currently viewed by another user pertaining to the same users community, even without being invited to and according to security rules.

## Description

### 1. Technical Field

The invention concerns the sharing of multimedia contents between users, which pertain to a group like a family, a community...

More precisely, the invention concerns the capability to see, with security rules, what other members of a community are currently seeing, or what other members of the community have seen in the past, even without being invited to do so.

The invention can be implemented for a local network (case of a family for example) but also for a large network through the cloud (case of a community of users).

### 2. Background Art

In a group of persons, called community, sometimes some members would like to see multimedia content (e.g. audio/video) currently seen by others on any remote devices (TV decoder, TV, tablets, smartphone...), called communication terminals or boxes.

Some applications related to "virtual TV rooms" are available, allowing users pertaining to a users community (community of users) to be connected in "virtual TV rooms" for a shared participatory viewing experience, but the users can only share their viewing experience by exchanging impressions on the video program in real-time.

In another context, parental control is done by many means, but no "visual" parental control applications are available in a multi boxes environment and at distance. Now, it would be helpful and more efficient, for a parent, to really view what his child is viewing.

Thus, there remains a significant need for allowing members of a community to see what other remote members of a community are currently seeing, or what other members of the community saw in the past, even without being invited to do so, and with security rules.

### 3. Summary Of Invention

The aim of the invention is thus that of solving at least some of the drawbacks of the prior art cited above, by a method for the rendering of a first multimedia content, among a plurality of multimedia contents, on a first communication terminal on which a first user is logged, said first multimedia content being currently or previously rendered on a second communication terminal on which a second user is logged, said first and second users being registered to a community managed by a remote server.

According to the different embodiments of the invention, the method comprises the following steps, in the first communication terminal:
- a step of obtaining at least one set of information related to at least one authorized multimedia content among the plurality of multimedia contents, said authorized content being currently or previously rendered on a distinct communication terminal on which a distinct user of said community is logged, said step of obtaining comprising a sub-step of verifying that said first user is associated to access rights for any multimedia content currently or previously rendered on a communication terminal on which said distinct user is logged;
- a step of selecting said first multimedia content among said authorized contents;
- a step of rendering of said first multimedia content on said first communication terminal.

So, the invention, according to its different embodiments, proposes a new and inventive way to access a multimedia content, by rendering it on a communication terminal, for a user, said multimedia content being currently (or previously) rendered for another user logged on another communication terminal, said users pertaining to a same users community, managed by a remote server.

For example, the invention allows a parent viewing what his child is currently viewing on his personal computer, without informing the child, as a "visual" parental control application.

For that, when the user logs on a communication terminal, he obtains (for example in response to a request or periodically) one or many "snapshots" related to one or many contents, currently or previously rendered on communication terminals on which users of the community are logged, for which the user possess access rights. These contents are called "authorized" contents, because the snapshots obtained do not correspond to all the contents, currently or previously rendered on communication terminals on which users of the community are logged, but only contents the user is authorized to view.

Thus, an "authorized multimedia content" is defined in the context of the invention as a multimedia content for which the rendering is authorized in view of the rights and/or privileges of the user who intends to access and render it.

Then, among these authorized contents, the user can select the one he wants to be rendered on its communication terminal.

According to one aspect of the disclosure, the set of information is obtained from the remote server or from a distinct communication terminal on which a user of the community is logged.

So, according to a specific embodiment of the invention, the snapshots are transmitted by the remote server in charge of the management of the users community. This embodiment correspond to a "centralized" management of the snapshots, where each communication terminal on which a user of the community is logged transmits, to the remote server, a snapshot corresponding to the current rendered content.

According to another specific embodiment of the invention, each communication terminal on which a user of the community is logged transmits, to one or many communication terminals on which a user of the community is logged, a snapshot corresponding to the current rendered content.

In the two cases, all snapshots corresponding to authorized contents are available for the first user, from the remote server of from another communication terminal.

For example, a set of information comprises at least one piece of information pertaining to the group comprising:
- a user identifier;
- a date at which said set of information is available;
- a Uniform Resource Identifier enabling said access to said multimedia content;
- a position in second and/or byte in said multimedia content;
- a MediaID identifying said multimedia content;
- a position in said Mediald;
- a piece of information related to a predetermined criteria for delivering said set of information;
- at least one information related to a user of said community invited to access said multimedia content.

So, according to this embodiment of the invention, the snapshots contain some information related to the content currently (or previously) rendered (such as information allowing to access to the content), to the user currently (or previously) viewing the content... in order that the content can be rendered on the terminal on which the first user is logged.

According to a specific embodiment of the invention, the method comprises a preliminary step of registering said first communication terminal to said remote server for a service for rendering of at least a multimedia content.

So, according to this embodiment, the communication terminal on which the first user is logged first registers to the remote server providing the service of rendering a content currently (or previously) rendered on another communication terminal also registered to the same server. Thus, thanks to this registration, the communication terminal can for example receive the snapshots from the remote server (or from other communication terminals), or sends the snapshots corresponding to content rendered on it, to the remote server (or to other communication terminals).

According to a specific feature of the invention, the method comprises a step of delivering, to the remote server or to at least one communication terminal on which a user of said community is logged, at least one set of information related to a multimedia content currently rendered on said first communication terminal for said first user.

So, according to a first variant of this embodiment, the communication terminal on which the first user is logged transmits a snapshot corresponding to the current rendered content, to the remote server managing the community, so that the remote server manages in a "centralized" manner all the snapshots received from one or many communication terminals, in order to deliver them when required. This variant allows the server to manage an history of the snapshots received, allowing thus a user to view a content previously rendered.

According to a second variant of this embodiment, the communication terminal on which the first user is logged transmits a snapshot corresponding to the current rendered content, to one or many communication terminals on which a user of the community is logged. According to this second variant, the distinct terminal(s) need to subscribe for receiving snapshots from the first user. This subscription can be managed by the server, in order to manage the access rights. This transmission may occur in response to a request from the distinct user(s), or periodically, or when a change (zapping, change in parental control level, ...) occurs on the first user terminals ...

For example, the step of delivering is achieved according to a predetermined criteria pertaining to the group comprising:
- a frequency for delivering;
- a change of multimedia content access;
- a parental level change;
- a user request.

So, the delivery of snapshots can be achieved according to a predetermined criteria (periodically, on request, ...) chosen for example by the user.

According to an embodiment of the invention, the method comprises a step of transmitting at least one invitation to another user of said community for accessing a multimedia content currently or previously accessed by said first user.

According to another aspect of the invention, the method comprises, in the remote server, a step of associating, to at least one user of said community, at least one piece of information related to an access right to any multimedia content actually or previously rendered on a at least a distinct communication terminal on which at least a distinct user of said community is logged.

So, according to this embodiment, the remote server manages the access rights associated to the users pertaining to the community, for the rendering of content currently or previously rendered on distinct terminals on which distinct users are logged.

For example, the remote server can implement a two dimensions table in which is stored the right for a member of the community to see or not what each other member of the community is currently viewing (or has previously viewed).

According to another embodiment of the invention, the method comprises, in the remote server, a step of obtaining, from a communication terminal among the plurality of communication terminals, at least one set of information related to at least a multimedia content currently rendered on said communication terminal on which a user of said community is logged.

So, according to this embodiment, the remote server manages in a "centralized" manner all the snapshots received from one or many communication terminals, in order to deliver them when required.

According to another aspect of the invention, the method comprises, in the remote server, a step of managing, for at least one user of said community, an history of said sets of information obtained.

So, this embodiment allows the server to manage an history of the snapshots received, allowing thus a user to view a content previously rendered.

The invention also concerns a system for the rendering of a first multimedia content among a plurality of multimedia contents, on a first communication terminal on which a first user is logged, said first multimedia content being currently or previously rendered on a second communication terminal on which a second user is logged, said first and second users being registered to a community managed by a remote server, the system comprising the following means:
- an associating module, in the remote server, configured to associate, to at least one user of said community, at least one piece of information related to an access right to any multimedia content actually or previously rendered on a at least a distinct communication terminal on which at least a distinct user of said community is logged,
- a reception module, on the first communication terminal, configured to obtain at least one set of information related to at least one authorized multimedia content among said plurality of multimedia contents, said authorized content being currently or previously rendered on a distinct communication terminal on which a distinct user of said community is logged, said reception module comprising a verification module configured to verify that said first user is associated to access rights for any multimedia content currently or previously rendered on a communication terminal on which said distinct user is logged;

- a selecting module, on said the communication terminal, configured to select said first multimedia content among said authorized contents;
- a rendering module, on said the communication terminal, configured to render said first multimedia content.

The invention also concerns a communication terminal for the rendering of a first multimedia content among a plurality of multimedia contents, on a first communication terminal on which a first user is logged, said first multimedia content being currently or previously rendered on a second communication terminal on which a second user is logged, said first and second users being registered to a community managed by a remote server, the communication terminal comprising the following means:
- a reception module 310 configured to obtain at least one set of information related to at least one authorized multimedia content among said plurality of multimedia contents, said authorized content being currently or previously rendered on a distinct communication terminal on which a distinct user of said community is logged, said reception module comprising a verification module configured to verify that said first user is associated to access rights for any multimedia content currently or previously rendered on a communication terminal on which said distinct user is logged;
- a selecting module 320 configured to select said first multimedia content among said authorized contents;
- a rendering module 330 configured to render said first multimedia content.

The invention also concerns a server for the rendering of a first multimedia content among a plurality of multimedia contents, on a first communication terminal on which a first user is logged, said first multimedia content being currently or previously rendered on a second communication terminal on which a second user is logged, said first and second users being registered to a community managed by the remote server, that comprises the following means:
- an associating module configured to associate, to at least one user of said community, at least one piece of information related to an access right to any multimedia content actually or previously rendered on a at least a distinct communication terminal on which at least a distinct user of said community is logged.

The disclosure further relates to a computer program product downloadable from a communication network and/or recorded on a medium readable by computer and/or executable by a processor, comprising program code instructions for implementing said method for the rendering of a first multimedia content.

The disclosure also relates to a non-transitory computer-readable medium comprising a computer program product recorded thereon and capable of being run by a processor, including program code instructions for implementing said method for the rendering of a first multimedia content.

Although examples of the invention have been described hereinabove in relation with a limited number of embodiments, those skilled in the art, when reading this description, will understand that other embodiments can be imagined without leaving the scope of this invention.

In particular, while not explicitly described, the present embodiments may be employed in any combination or sub-combination.

As will be appreciated by one skilled in the art, aspects of the present principles can be embodied as a device, method or computer readable medium. Accordingly, aspects of the present principles can take the form of an entirely hardware embodiment, an entirely software embodiment (including firmware, resident software, micro-code, and so forth), or an embodiment combining software and hardware aspects than can all generally be referred herein as a "circuit", "module", or "device". Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a random access memory (RAM); a read-only memory (ROM); an erasable programmable read-only memory (EPROM or Flash memory); a portable compact disc read-only memory (CD-ROM); an optical storage device; a magnetic storage device; or any suitable combination of the foregoing.

Moreover, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo-code, and the like represent various processes which may be substantially represented in computer readable storage media and so executed by a computer or processor, whether or not such computer or processor is explicitly shown.

### 4. Brief Description of Drawings

Other characteristics and advantages of embodiments of the invention shall appear when reading the following description, provided by way of a non-restricted and indicative example (all of the embodiments of the invention are not limited to the characteristics and advantages of the embodiments described hereinafter), and the annexed drawings, wherein:
- Figure 1 shows the main steps of the method according to an embodiment of the invention;
- Figure 2 illustrates an example of system according to an embodiment of the invention;
- Figures 3 and 4 illustrate an example of a simplified structure respectively of a communication terminal and a remote server according to an embodiment of the invention.

### 5. Description of Embodiments

### 5.1 General principle

The invention, according to its different embodiments, proposes a method allowing a first user to render, on its terminal, or more precisely on the terminal on which he's logged, a multimedia content currently viewed by another user, pertaining to the same users community as the first user, even without being invited to by the other user and by respecting some security rules.

The principle of the invention is thus based on the possibility for a user to choose the content it wants to render on its terminal, thanks to snapshots related to contents, delivered by a remote server or other communication terminals.

Of course the rendering of the multimedia content must in some cases be "secured", in the way for example that the children cannot visualize what parents are currently seeing. In another example, a user may refuse to be "followed" by others, or by another user in particular, i.e. a user may not want to share with others what he's currently seeing.

Thus, the principle of the invention is also based on the management, by a remote server managing the users community, of access rights, or privileges, for users to see what other users are currently seeing, or have previously seen.

For that, the invention, according to its different embodiments, comprises some steps implemented on the communication terminal on which a user of the community is logged, and some steps implemented on a remote server, managing the users community and some features of the invention.

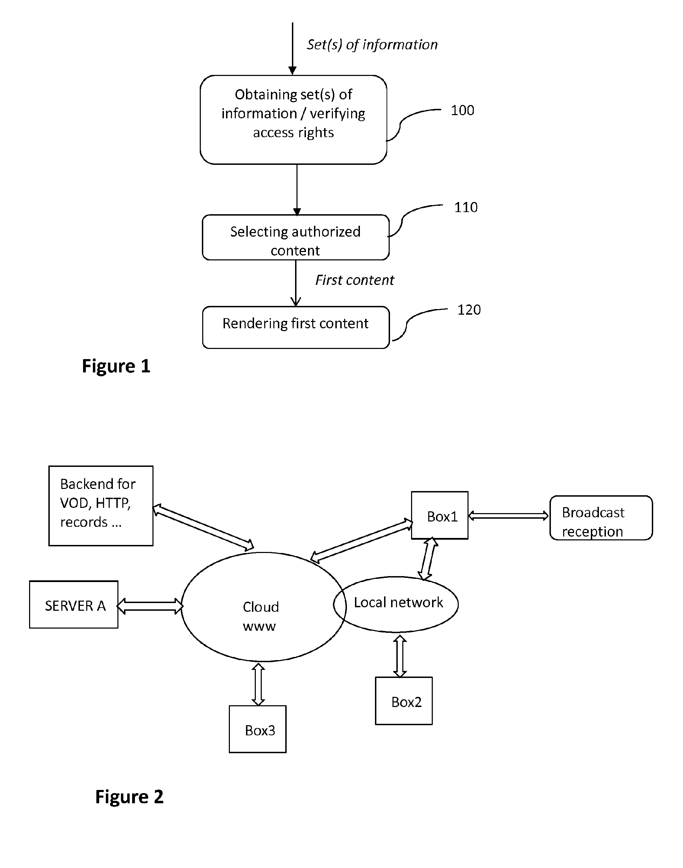

First of all, as illustrated in figure 2, a service located on a server A, which can be local or in the cloud, enables to define and store a group of members called a community. This community is for example managed in the form of a list of pairs of a login (or a Userld) and a password, associated to each user of the community.

This server A is also implied in the invention, according to its different embodiments, to offer a service *S* to the members of the community that enable them to see what some or all other members of the community are currently seeing (or have seen).

In the system illustrated on figure 2, some members of the community, or users, are logged on communication terminals, also called boxes (Box1, Box2 and Box3).

### 5.2 Embodiments

Thus, the proposed method for the rendering of a first multimedia content, according to an embodiment of the invention, comprises the following steps, for a first user logged on a first communication terminal, as illustrated in figure 1:
- a step of obtaining (100) one or many sets of information, also called snapshots, related to one or many authorized multimedia contents. The authorized contents correspond to contents being currently (or previously) rendered on distinct communication terminals on which distinct users of the community are logged and for which it has been verified that the first user is associated to access rights for any multimedia content currently or previously rendered on communication terminal(s) on which said distinct user(s) are logged. In other words, an authorized content is a content for which the first user has access rights, because he has access rights to any content that can be viewed by the particular user(s). For example, an authorized content corresponds, for a parent, to all the contents that can be viewed by his child, on any communication terminal on which the child can be logged. Such a set of information, or snapshot, as explained later in more details, allows the user to choose the content he wants to see;
- a step of selecting (110) a first multimedia content among the authorized contents, i.e. the first user chooses the content he wants to see on his communication terminal, after having "studied" the snapshots he obtains at the previous step;
- a step of rendering (120) of the first multimedia content on the first communication terminal, as chosen by the first user.

According to an embodiment, the invention comprises a preliminary step of registration, where a user, on any box, can subscribe to receive the snapshots of other members of the community. This subscription can be customized to receive snapshots on a set of criteria that can be combined ("anded") and/or that are exclusive ("ored"). For example, the customization can be achieved by giving a list of "Userld" and a list of reasons for receiving the snapshots (new event, parental control change, invitation...).

According to a first variant of the embodiment, the subscription of a user to receive the snapshots of other members of the community is managed by the server that notifies the box.

According to another variant, the subscription of a user is managed by the publication/submission mechanism of the boxes.

Then, after the registration step, when starting a box, the first user must enter its identification information (login/password for example) dedicated to the service *S* offered by the remote server, or is identified by any means such as voice recognition, or face image recognition... This process allows the user to access to the service *S* and to be recognized as a member of the community having some rights to view some contents currently or previously rendered on distinct boxes on which other users of the community are logged.

According to the first variant, the remote server A stores all the snapshots received from the users of the community, when logged on a communication terminals. Later will be described the different ways the snapshots can be delivered.

Then, on a user request, the server will return the snapshots list corresponding to the contents that the user is authorized to see, in order to respect the privileges associated to the user.

For that, the server A also manages for each members of the community different privileges that enable them to see what some or all other members of the community are currently seeing (or have seen). Thus, before delivering any snapshot to a first user, the server A checks the access rights associated to this first user, according to the other users that are logged on their communication terminals and currently viewing a content.

Thus, according to this first variant, the first user will get from the server, on its communication terminal, the list of snapshots currently seen by others, and for which he possess access rights.

According to the second variant, i.e. in a publication/submission mechanism, snapshots are received from other communication terminals, and not from the server A.

In this case, the security rules can be implemented through an encryption key that can be generated and stored in the server A for each user pertaining to the community. This encryption key is used to encrypt the snapshots of a user. To decrypt the received snapshots, the communication terminal on which the first user is logged must request the encryption key from the server S that will return it or not depending on the rights associated to the first user. For example, a user can receive, on its terminal communication, three snapshots related to three contents currently viewed by three other members of the community, only two of them corresponding to contents that the user can view, according to its privileges. Thus, in this case, if the user wants to see the snapshot for which it doesn't possess access rights, he will not receive, from the server, the encryption key and will not be able to see this content.

### 5.3 Access rights management

The management of the members privileges that enable them to see what some or all other members of the community are currently seeing (or have seen) can be implemented, for example, by a two-dimensions table in which is stored the right(s) for a member to see or not what is currently seeing each other member of the community. Any other examples for managing the privileges of all the members of the community can be implemented, according to different embodiments of the invention.

These rights can be modified, for a user, by the user itself, for example in the case of a parent who wants to add a child as a user to "control".

These rights can also be modified, for example, by other users, according to their own rights, for example in the case of a user who wants no more to allow a particular other user to see what he is currently seeing.

### 5.4 Snapshots

Another aspect of this disclosure concerns the delivery of snapshots when a user is viewing a multimedia content, and the information comprised in a snapshot.

After the user's connection to a multimedia content, through its communication terminal, a snapshot is sent to the server (first variant described above), or published to other users (second variant described above), depending on the embodiment, by the communication terminal on which the user is logged.

According to an embodiment, to be sure that the snapshot is sent, a control can be added in order to forbid visualization of any media if the communication terminal is not connected with the service *S* on the remote server A. Another option is to keep the snapshots internally in the communication terminal and to send them later when the communication terminal is connected to the service on the remote server *S*.

Thus, a module is installed on each communication terminal of the users of the community registered to the service *S*, in order to publish a snapshot describing the media currently seen (in case of a publication/submission mechanism) or to send, to the server A, a snapshot describing the media currently seen.

According to the different embodiments of the invention, a snapshot contains everything needed to be able to "join" or "connect", for another user logged on its communication terminal, the multimedia content seen at the moment it was sent.

For example, a snapshot contains at least:
- The Userld or login;
- The date (e.g. UTCTime) at which the snapshot is sent or published;
- The URI that enables to visualize the multimedia content (broadcast service (cable, satellite, terrestrial), UDP service, HTTP streaming, VOD, record done on a local server or in the cloud, media files or any other multimedia content...);
- The position, in second and/or in byte, in the multimedia content described by the URI. For example, in case of live, it is 0, in case of time-shift the value is less than or equal to 0, and in other cases it is greater than 0 and less than the duration, or size, of the multimedia content.

Optionally, the snapshot can also contain:
- Any MediaID that identifies the current program (such as a ISAN code or DVB Eventld....) that could help a communication terminal that cannot access the URI to access the same program by another mean;
- If the Mediald is present, the position in the Mediald, i.e. MedialdPosition;
- The reason why the snapshot was generated: periodically, at new media seeing, at event change, at parental level change, or on a user request (invitation)....;
- The list of persons invited, in case the reason is invitation.

A snapshot can also contain any additional information that could be needed to render the corresponding multimedia content on another communication terminal.

With the snapshots of other members, delivered by the remote server or by other communication terminals according to the variants of the invention described above, any communication terminal is able to see what others are seeing, depending on the user access rights. If for any reasons, a communication terminal cannot access to an URI, it can use the Mediald to search for the same program by another mean.

The principles described above can be generalized to old snapshots (programs seen in the past). The server in that case maintains an history of the snapshots of all members of the community and this history can be got from other members. In this case also, the security aspects remain the same.

### 5.5 Examples

For example, the invention can be implemented for a visual parental control, allowing the parents to really see what their children are currently seeing on their communication terminals, or have previously seen, without children knowing.

Indeed, by getting the snapshots for all the multimedia contents rendered on the communication terminals of their children, the parents can choose to be sure that the contents can be viewed by their children by viewing the contents on their own terminals.

In this case, the user community can for example comprise the members of a family, that is managed by a server (that may be in a local network) that also manages the privileges associating to the users, defined as following:
- The parents possess access rights for all the contents the children are viewing, in any cases;
- The children possess access rights for the contents viewed by other children and parents, only when they're invited to.

Thus, each time a child is logged on a communication terminal and access a multimedia content (i.e. a movie, an Internet Site, ...), a snapshot related to the multimedia content is sent to the server, which manages the snapshots of all the members of the family. If a parent is logged on a communication terminal, he receives the snapshot each time a child access a content or changes the content accessed. The parent can then choose to access any content described by any received snapshot.

In this case too, the children can also share among them the contents they are viewing, also by receiving the snapshots corresponding to their access rights. For example, the children are not authorized to view what the parents are viewing, so the children will not receive any snapshot related to contents viewed by the parents.

In another example of application for the invention, users pertaining to a users community, for example users having same movies tastes, can share the movies they are viewing, by informing, through the publication of snapshots, the other members of the community of what they are currently seeing. In this case, the access rights associated to each user are managed by the remote server in charge of the service for sharing multimedia contents according to the invention.

Thus, a user pertaining to this community can choose what movie he wants to see, thanks to the snapshots he receives, describing what the other users of the community are currently viewing.

For example, some users possess rights to view what other members of the community are viewing in any cases, i.e. they will receive a snapshot each time another user access to a new movie. Some other users possess rights to view what other members of the community are viewing only when they're invited to. In this case, these users will receive snapshots only when other users invite them, and not each time other users access a new movie.

All these examples can also be implemented for multimedia contents previously viewed, in the case where the remote server also manages an history for the snapshots.

### 5.6 Simplified structures of a communication terminal and a server

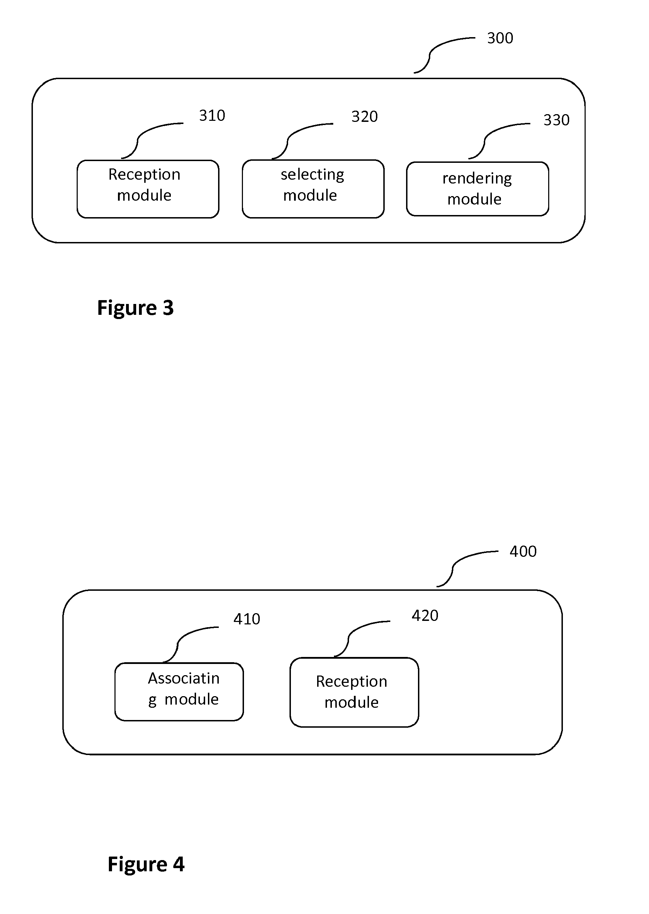

Finally, figures 3 and 4 present a simplified structure of a communication terminal 300 on which a user is logged, and a simplified structure of a remote server 400, for the rendering of a first multimedia content, according to a particular embodiment of the invention.

According to the different embodiments of the invention, the communication terminal 300 on which a first user is logged, for the rendering of a first multimedia content being currently or previously rendered on a second communication terminal on which a second user is logged, said first and second users being registered to a community managed by a remote server, comprises the following means:
- a reception module 310 configured to obtain snapshot(s) related to authorized multimedia content(s) being currently or previously rendered on distinct communication terminal(s) on which distinct user(s) of said community is(are) logged; the reception module 310 comprising a verification module (not illustrated) configured to verify that the first user is associated to access rights for any multimedia content currently or previously rendered on communication terminal(s) on which said distinct user(s) is(are) logged;
- a selecting module 320 configured to select a first multimedia content among the authorized contents;
- a rendering module 330 configured to render the first multimedia content.

According to the different embodiments of the invention, the remote server 400, for the rendering of a first multimedia content among a plurality of multimedia contents, on a first communication terminal on which a first user is logged, said first multimedia content being currently or previously rendered on a second communication terminal on which a second user is logged, said first and second users being registered to a community managed by the remote server 400, comprises an associating module 410 configured to associate, to at least one user of said community, at least one piece of information related to an access right to any multimedia content actually or previously rendered on a at least a distinct communication terminal on which at least a distinct user of said community is logged.

According to a particular embodiment, the server 400 further comprises a reception module 420 configured to obtain, from a communication terminal among the plurality of communication terminals, at least one snapshot related to at least a multimedia content currently rendered on the communication terminal on which a user of the community is logged.

## Claims

1. A method for the rendering of a first multimedia content, among a plurality of multimedia contents, on a first communication terminal on which a first user is logged, said first multimedia content being currently or previously rendered on a second communication terminal on which a second user is logged, said first and second users being registered to a community managed by a remote server,
said method being **characterized in that** it comprises the following steps, in said first communication terminal:
- a step of obtaining (100) at least one set of information related to at least one authorized multimedia content among said plurality of multimedia contents, said authorized content being currently or previously rendered on a distinct communication terminal on which a distinct user of said community is logged, said step of obtaining comprising a sub-step of verifying that said first user is associated to access rights for any multimedia content currently or previously rendered on a communication terminal on which said distinct user is logged;
- a step of selecting (110) said first multimedia content among said authorized contents;
- a step of rendering (120) of said first multimedia content on said first communication terminal.

2. The method for the rendering of a first multimedia content according to claim 1, **characterized in that** said set of information is obtained from said remote server or from a distinct communication terminal on which a user of said community is logged.

3. The method for the rendering of a first multimedia content according to claim 1, **characterized in that** said set of information comprises at least one piece of information pertaining to the group comprising:
- a user identifier;
- a date at which said set of information is available;
- a Uniform Resource Identifier enabling said access to said multimedia content;
- a position in second and/or byte in said multimedia content;
- a MediaID identifying said multimedia content;
- a position in said Mediald;
- a piece of information related to a predetermined criteria for delivering said set of information;
- at least one information related to a user of said community invited to access said multimedia content.

4. The method for the rendering of a first multimedia content according to claim 1, **characterized in that** said method comprises a preliminary step of registering said first communication terminal to said remote server for a service for rendering of at least a multimedia content.

5. The method for the rendering of a first multimedia content according to claim 3, **characterized in that** said method comprises a step of delivering, to said remote server or to at least one communication terminal on which a user of said community is logged, at least one set of information related to a multimedia content currently rendered on said first communication terminal for said first user.

6. The method for the rendering of a first multimedia content according to claim 5, **characterized in that** said step of delivering is achieved according to a predetermined criteria pertaining to the group comprising:
- a frequency for delivering;
- a change of multimedia content access;
- a parental level change;
- a user request.

7. The method for the rendering of a first multimedia content according to claim 1, **characterized in that** it comprises a step of transmitting at least one invitation to another user of said community for accessing a multimedia content currently or previously accessed by said first user.

8. The method for the rendering of a first multimedia content according to claim 1, **characterized in that** it comprises, in said remote server, a step of associating, to at least one user of said community, at least one piece of information related to an access right to any multimedia content actually or previously rendered on a at least a distinct communication terminal on which at least a distinct user of said community is logged.

9. The method for the rendering of a first multimedia content according to claim 1, **characterized in that** it comprises, in said remote server, a step of obtaining, from a communication terminal among the plurality of communication terminals, at least one set of information related to at least a multimedia content currently rendered on said communication terminal on which a user of said community is logged.

10. The method for the rendering of a first multimedia content according to claim 9, **characterized in that** it comprises, in said remote server, a step of managing, for at least one user of said community, an history of said sets of information obtained.

11. A system for the rendering of a first multimedia content among a plurality of multimedia contents, on a first communication terminal on which a first user is logged, said first multimedia content being currently or previously rendered on a second communication terminal on which a second user is logged, said first and second users being registered to a community managed by a remote server,
said system being **characterized in that** it comprises the following means:
- an associating module, in said remote server, configured to associate, to at least one user of said community, at least one piece of information related to an access right to any multimedia content actually or previously rendered on a at least a distinct communication terminal on which at least a distinct user of said community is logged,
- a reception module, on said first communication terminal, configured to obtain at least one set of information related to at least one authorized multimedia content among said plurality of multimedia contents, said authorized content being currently or previously rendered on a distinct communication terminal on which a distinct user of said community is logged, said reception module comprising a verification module configured to verify that said first user is associated to access rights for any multimedia content currently or previously rendered on a communication terminal on which said distinct user is logged;
- a selecting module, on said first communication terminal, configured to select said first multimedia content among said authorized contents;
- a rendering module, on said first communication terminal, configured to render said first multimedia content.

12. A communication terminal for the rendering of a first multimedia content among a plurality of multimedia contents, on a first communication terminal on which a first user is logged, said first multimedia content being currently or previously rendered on a second communication terminal on which a second user is logged, said first and second users being registered to a community managed by a remote server,
said communication terminal being **characterized in that** it comprises the following means:
- a reception module 310 configured to obtain at least one set of information related to at least one authorized multimedia content among said plurality of multimedia contents, said authorized content being currently or previously rendered on a distinct communication terminal on which a distinct user of said community is logged, said reception module comprising a verification module configured to verify that said first user is associated to access rights for any multimedia content currently or previously rendered on a communication terminal on which said distinct user is logged;
- a selecting module 320 configured to select said first multimedia content among said authorized contents;
- a rendering module 330 configured to render said first multimedia content.

13. A server for the rendering of a first multimedia content among a plurality of multimedia contents, on a first communication terminal on which a first user is logged, said first multimedia content being currently or previously rendered on a second communication terminal on which a second user is logged, said first and second users being registered to a community managed by said remote server,
said server being **characterized in that** it comprises the following means:
- an associating module 410 configured to associate, to at least one user of said community, at least one piece of information related to an access right to any multimedia content actually or previously rendered on a at least a distinct communication terminal on which at least a distinct user of said community is logged.

14. A Computer program product downloadable from a communication network and/or recorded on a medium readable by computer and/or executable by a processor, comprising program code instructions for implementing the steps of the method for the rendering of a first multimedia content according to at least one of claims 1 to 10.

15. A non-transitory computer-readable medium comprising a computer program product recorded thereon and capable of being run by a processor, including program code instructions for implementing the steps of the method for the rendering of a first multimedia content according to at least one of claims 1 to 10.
